# EUROPEAN PATENT APPLICATION

(11) **EP 4 597 967 A2**
(43) Date of publication of application: **06.08.2025**
(21) Application number: 25152916.0
(22) Date of filing: 20.01.2025
(51) Int. Cl.: H04L 41/0833, H04L 43/08, H04W 24/02, H04W 24/04, H04L 43/065, H04W 24/10

(54) **ENERGY MANAGEMENT FRAMEWORK FOR RADIO ACCESS NETWORK INTELLIGENT CONTROLLER PLATFORM SERVICE**

(30) Priority: 02.02.2024 FI 20245103
(71) Applicant: Nokia Solutions and Networks Oy, 02610 Espoo (FI)
(72) Inventor: NANAVATY, Niraj, 560037 Bangalore (IN); Srilakshmi, SRINIVASARAJU, 560020 Bangalore (IN); BHAT, Neelam, 560087 Bangalore (IN)
(74) Representative: DREISS Patentanwälte PartG mbB

(57) **Abstract**

Systems, methods, apparatuses, and computer program products for energy management functionality in a radio access network intelligent controller platform service. One method may include transmitting, by an energy management entity, to a near-real time radio access network intelligent controller application repository function, at least one request for a list of registered near-real time radio access network intelligent controller applications from a plurality of registered near-real time radio access network intelligent controller applications; receiving, by the energy management entity, from the near-real time radio access network intelligent controller application repository function, the list of registered near-real time radio access network intelligent controller applications from among the plurality of registered near-real time radio access network intelligent controller applications; and analyzing, by the energy management entity, energy consumption trends of the list of registered near-real time radio access network intelligent controller applications to identify at least one trend or action.

## Description

### TECHNICAL FIELD

Some example embodiments may generally relate to mobile or wireless telecommunication systems, such as 3^{rd} Generation Partnership Project (3GPP) Long Term Evolution (LTE), 5^{th} generation (5G) radio access technology (RAT), new radio (NR) access technology, 6^{th} generation (6G), and/or other communications systems. For example, certain example embodiments may relate to systems and/or methods for energy management functionality in a radio access network (RAN) intelligent controller (RIC) platform service.

### BACKGROUND

Examples of mobile or wireless telecommunication systems may include radio frequency (RF) 5G RAT, the Universal Mobile Telecommunications System (UMTS) Terrestrial Radio Access Network (UTRAN), LTE Evolved UTRAN (E-UTRAN), LTE-Advanced (LTE-A), LTE-A Pro, NR access technology, and/or MulteFire Alliance. 5G wireless systems refer to the next generation (NG) of radio systems and network architecture. A 5G system is typically built on a 5G NR, but a 5G (or NG) network may also be built on E-UTRA radio. It is expected that NR can support service categories such as enhanced mobile broadband (eMBB), ultra-reliable low-latency-communication (URLLC), and massive machine-type communication (mMTC). NR is expected to deliver extreme broadband, ultra-robust, low-latency connectivity, and massive networking to support the Internet of Things (IoT). The next generation radio access network (NG-RAN) represents the radio access network (RAN) for 5G, which may provide radio access for NR, LTE, and LTE-A. It is noted that the nodes in 5G providing radio access functionality to a user equipment (e.g., similar to the Node B in UTRAN or the Evolved Node B (eNB) in LTE) may be referred to as next-generation Node B (gNB) when built on NR radio, and may be referred to as next-generation eNB (NG-eNB) when built on E-UTRA radio.

### SUMMARY

In accordance with some example embodiments, a method may include transmitting, by an energy management entity, to a near-real time radio access network intelligent controller application repository function, at least one request for a list of registered near-real time radio access network intelligent controller applications from a plurality of registered near-real time radio access network intelligent controller applications. The method may further include receiving, by the energy management entity, from the near-real time radio access network intelligent controller application repository function, the list of registered near-real time radio access network intelligent controller applications from among the plurality of registered near-real time radio access network intelligent controller applications. The method may further include analyzing, by the energy management entity, energy consumption trends of the list of registered near-real time radio access network intelligent controller applications to identify at least one trend or action.

In accordance with certain example embodiments, an apparatus may include means for transmitting, to a near-real time radio access network intelligent controller application repository function, at least one request for a list of registered near-real time radio access network intelligent controller applications from a plurality of registered near-real time radio access network intelligent controller applications. The apparatus may further include means for receiving, from the near-real time radio access network intelligent controller application repository function, the list of registered near-real time radio access network intelligent controller applications from among the plurality of registered near-real time radio access network intelligent controller applications. The apparatus may further include means for analyzing energy consumption trends of the list of registered near-real time radio access network intelligent controller applications to identify at least one trend or action.

In accordance with various example embodiments, a non-transitory computer readable medium may include program instructions that, when executed by an apparatus, cause the apparatus to perform at least a method. The method may include transmitting, to a near-real time radio access network intelligent controller application repository function, at least one request for a list of registered near-real time radio access network intelligent controller applications from a plurality of registered near-real time radio access network intelligent controller applications. The method may further include receiving, from the near-real time radio access network intelligent controller application repository function, the list of registered near-real time radio access network intelligent controller applications from among the plurality of registered near-real time radio access network intelligent controller applications. The method may further include analyzing energy consumption trends of the list of registered near-real time radio access network intelligent controller applications to identify at least one trend or action.

In accordance with some example embodiments, a computer program product may perform a method. The method may include transmitting, to a near-real time radio access network intelligent controller application repository function, at least one request for a list of registered near-real time radio access network intelligent controller applications from a plurality of registered near-real time radio access network intelligent controller applications. The method may further include receiving, from the near-real time radio access network intelligent controller application repository function, the list of registered near-real time radio access network intelligent controller applications from among the plurality of registered near-real time radio access network intelligent controller applications. The method may further include analyzing energy consumption trends of the list of registered near-real time radio access network intelligent controller applications to identify at least one trend or action.

In accordance with certain example embodiments, an apparatus may include at least one processor and at least one memory storing instructions that, when executed by the at least one processor, cause the apparatus at least to transmit, to a near-real time radio access network intelligent controller application repository function, at least one request for a list of registered near-real time radio access network intelligent controller applications from a plurality of registered near-real time radio access network intelligent controller applications. The at least one memory and instructions, when executed by the at least one processor, may further cause the apparatus at least to receive, from the near-real time radio access network intelligent controller application repository function, the list of registered near-real time radio access network intelligent controller applications from among the plurality of registered near-real time radio access network intelligent controller applications. The at least one memory and instructions, when executed by the at least one processor, may further cause the apparatus at least to analyze energy consumption trends of the list of registered near-real time radio access network intelligent controller applications to identify at least one trend or action.

In accordance with various example embodiments, an apparatus may include transmitting circuitry configured to perform transmitting, to a near-real time radio access network intelligent controller application repository function, at least one request for a list of registered near-real time radio access network intelligent controller applications from a plurality of registered near-real time radio access network intelligent controller applications. The apparatus may further include receiving circuitry configured to perform receiving, from the near-real time radio access network intelligent controller application repository function, the list of registered near-real time radio access network intelligent controller applications from among the plurality of registered near-real time radio access network intelligent controller applications. The apparatus may further include analyzing circuitry configured to perform analyzing energy consumption trends of the list of registered near-real time radio access network intelligent controller applications to identify at least one trend or action.

In accordance with some example embodiments, a method may include receiving, by a network entity, from an application, a registration request. The method may further include processing, by the network entity, the registration request. The method may further include identifying transmitting, by the network entity, to an energy management entity, an indication configured to add or delete an application identifier to or from a list of energy managed applications.

In accordance with certain example embodiments, an apparatus may include means for receiving, from an application, a registration request. The apparatus may further include means for processing the registration request. The apparatus may further include means for transmitting, to an energy management entity, an indication configured to add or delete an application identifier to or from a list of energy managed applications.

In accordance with various example embodiments, a non-transitory computer readable medium may include program instructions that, when executed by an apparatus, cause the apparatus to perform at least a method. The method may include receiving, from an application, a registration request. The method may further include processing the registration request. The method may further include transmitting, to an energy management entity, an indication configured to add or delete an application identifier to or from a list of energy managed applications.

In accordance with some example embodiments, a computer program product may perform a method. The method may include receiving, from an application, a registration request. The method may further include processing the registration request. The method may further include transmitting, to an energy management entity, an indication configured to add or delete an application identifier to or from a list of energy managed applications.

In accordance with certain example embodiments, an apparatus may include at least one processor and at least one memory storing instructions that, when executed by the at least one processor, cause the apparatus at least to receive, from an application, a registration request. The at least one memory and instructions, when executed by the at least one processor, may further cause the apparatus at least to process the registration request. The at least one memory and instructions, when executed by the at least one processor, may further cause the apparatus at least to transmit, to an energy management entity, an indication configured to add or delete an application identifier to or from a list of energy managed applications.

In accordance with various example embodiments, an apparatus may include receiving circuitry configured to perform receiving, from an application, a registration request. The apparatus may further include processing circuitry configured to perform process the registration request. The apparatus may further include transmitting circuitry configured to perform transmitting, to an energy management entity, an indication configured to add or delete an application identifier to or from a list of energy managed applications.

In accordance with some example embodiments, a method may include receiving, by an application, from a near-real time radio access network intelligent controller platform, an indication configured to add or delete an application identifier to or from a list of energy managed applications. The method may further include adding or deleting, by the application, the application identifier to or from the list of energy managed applications.

In accordance with certain example embodiments, an apparatus may include means for receiving, from a near-real time radio access network intelligent controller platform, an indication configured to add or delete an application identifier to or from a list of energy managed applications. The apparatus may further include means for adding or deleting the application identifier to or from the list of energy managed applications.

In accordance with various example embodiments, a non-transitory computer readable medium may include program instructions that, when executed by an apparatus, cause the apparatus to perform at least a method. The method may include receiving, from a near-real time radio access network intelligent controller platform, an indication configured to add or delete an application identifier to or from a list of energy managed applications. The method may further include adding or deleting the application identifier to or from the list of energy managed applications.

In accordance with some example embodiments, a computer program product may perform a method. The method may include receiving, from a near-real time radio access network intelligent controller platform, an indication configured to add or delete an application identifier to or from a list of energy managed applications. The method may further include adding or deleting the application identifier to or from the list of energy managed applications.

In accordance with certain example embodiments, an apparatus may include at least one processor and at least one memory storing instructions that, when executed by the at least one processor, cause the apparatus at least to receive, from a near-real time radio access network intelligent controller platform, an indication configured to add or delete an application identifier to or from a list of energy managed applications. The at least one memory and instructions, when executed by the at least one processor, may further cause the apparatus at least to add or delete the application identifier to or from the list of energy managed applications.

In accordance with various example embodiments, an apparatus may include receiving circuitry configured to perform receiving, from a near-real time radio access network intelligent controller platform, an indication configured to add or delete an application identifier to or from a list of energy managed applications. The apparatus may further include adding or deleting circuitry configured to perform adding or deleting the application identifier to or from the list of energy managed applications.

In accordance with some example embodiments, a method may include receiving, by a network entity, from an energy management entity, an energy management input data request. The method may further include collecting, by the network entity, at least one of application-specific services data or common platform services data. The method may further include transmitting, by the network entity, to the energy management entity, an energy management input data report. The method may further include receiving, by the network entity, from the energy management entity, an application energy report.

In accordance with certain example embodiments, an apparatus may include means for receiving, from an energy management entity, an energy management input data request. The apparatus may further include means for collecting at least one of application-specific services data or common platform services data. The apparatus may further include means for transmitting, to the energy management entity, an energy management input data report. The apparatus may further include means for receiving, from the energy management entity, an application energy report.

In accordance with various example embodiments, a non-transitory computer readable medium may include program instructions that, when executed by an apparatus, cause the apparatus to perform at least a method. The method may include receiving, from an energy management entity, an energy management input data request. The method may further include collecting at least one of application-specific services data or common platform services data. The method may further include transmitting, to the energy management entity, an energy management input data report. The method may further include receiving, from the energy management entity, an application energy report.

In accordance with some example embodiments, a computer program product may perform a method. The method may include receiving, from an energy management entity, an energy management input data request. The method may further include collecting at least one of application-specific services data or common platform services data. The method may further include transmitting, to the energy management entity, an energy management input data report. The method may further include receiving, from the energy management entity, an application energy report.

In accordance with certain example embodiments, an apparatus may include at least one processor and at least one memory storing instructions that, when executed by the at least one processor, cause the apparatus at least to receive, from an energy management entity, an energy management input data request. The at least one memory and instructions, when executed by the at least one processor, may further cause the apparatus at least to collect at least one of application-specific services data or common platform services data. The at least one memory and instructions, when executed by the at least one processor, may further cause the apparatus at least to transmit, to the energy management entity, an energy management input data report. The at least one memory and instructions, when executed by the at least one processor, may further cause the apparatus at least to receive, from the energy management entity, an application energy report.

In accordance with various example embodiments, an apparatus may include receiving circuitry configured to perform receiving, from an energy management entity, an energy management input data request. The apparatus may further include collecting circuitry configured to perform collecting at least one of application-specific services data or common platform services data. The apparatus may further include transmitting circuitry configured to perform transmitting, to the energy management entity, an energy management input data report. The apparatus may further include receiving circuitry configured to perform receiving, from the energy management entity, an application energy report.

In accordance with some example embodiments, a method may include transmitting, by an energy management entity, to a network entity, an energy management input data request. The method may further include receiving, by the energy management entity, from the network entity, an energy management input data report. The method may further include determining, by the energy management entity, energy consumption for an application. The method may further include transmitting, by the energy management entity, to the network entity, an energy report comprising the determined energy consumption for the application.

In accordance with certain example embodiments, an apparatus may include means for transmitting, to a network entity, an energy management input data request. The apparatus may further include means for receiving, from the network entity, an energy management input data report. The apparatus may further include means for determining energy consumption for an application. The apparatus may further include means for transmitting, to the network entity, an energy report comprising the determined energy consumption for the application.

In accordance with various example embodiments, a non-transitory computer readable medium may include program instructions that, when executed by an apparatus, cause the apparatus to perform at least a method. The method may include transmitting, to a network entity, an energy management input data request. The method may further include receiving, from the network entity, an energy management input data report. The method may further include determining energy consumption for an application. The method may further include transmitting, to the network entity, an energy report comprising the determined energy consumption for the application.

In accordance with some example embodiments, a computer program product may perform a method. The method may include transmitting, to a network entity, an energy management input data request. The method may further include receiving, from the network entity, an energy management input data report. The method may further include determining energy consumption for an application. The method may further include transmitting, to the network entity, an energy report comprising the determined energy consumption for the application.

In accordance with certain example embodiments, an apparatus may include at least one processor and at least one memory storing instructions that, when executed by the at least one processor, cause the apparatus at least to transmit, to a network entity, an energy management input data request. The at least one memory and instructions, when executed by the at least one processor, may further cause the apparatus at least to receive, from the network entity, an energy management input data report. The at least one memory and instructions, when executed by the at least one processor, may further cause the apparatus at least to determine energy consumption for an application. The at least one memory and instructions, when executed by the at least one processor, may further cause the apparatus at least to transmit, to the network entity, an energy report comprising the determined energy consumption for the application.

In accordance with various example embodiments, an apparatus may include transmitting circuitry configured to perform transmitting, to a network entity, an energy management input data request. The apparatus may further include receiving circuitry configured to perform receiving, from the network entity, an energy management input data report. The apparatus may further include determining circuitry configured to perform determining energy consumption for an application. The apparatus may further include transmitting circuitry configured to perform transmitting, to the network entity, an energy report comprising the determined energy consumption for the application.

### BRIEF DESCRIPTION OF THE DRAWINGS

For a proper understanding of example embodiments, reference should be made to the accompanying drawings, wherein:
FIG. 1 illustrates an example of a near-real time RIC architecture;
FIG. 2 illustrates an example of a near-real time RIC architecture with energy management functionality according to certain example embodiments;
FIG. 3 illustrates an example of a signaling diagram for registering applications for energy management according to some example embodiments;
FIG. 4 illustrates an example of another signaling diagram for collecting and analyzing energy consumption data according to various example embodiments;
FIG. 5 illustrates an example of another signaling diagram for collecting and analyzing energy consumption data via cloud resources according to certain example embodiments;
FIG. 6 illustrates an example of a flow diagram of a method according to various example embodiments;
FIG. 7 illustrates an example of a flow diagram of another method according to certain example embodiments;
FIG. 8 illustrates an example of a flow diagram of another method according to some example embodiments;
FIG. 9 illustrates an example of a flow diagram of another method according to various example embodiments;
FIG. 10 illustrates an example of a flow diagram of another method according to certain example embodiments;
FIG. 11 illustrates an example of various network devices according to some example embodiments; and
FIG. 12 illustrates an example of a 5G network and system architecture according to various example embodiments.

### DETAILED DESCRIPTION

It will be readily understood that the components of certain example embodiments, as generally described and illustrated in the figures herein, may be arranged and designed in a wide variety of different configurations. Thus, the following detailed description of some example embodiments of systems, methods, apparatuses, and computer program products for energy management functionality in a RIC platform service is not intended to limit the scope of certain example embodiments, but is instead representative of selected example embodiments.

5G networks are continuing to grow more complex and costly in deployment and management, reducing daily average revenue per user. Mobile networks require significant energy to operate, especially in dense RAN and 5G NR areas. 5G operators also continue to seek new and improved revenue streams. In order to address both of these challenges, RICs, near-real time RIC applications (i.e., xApps), and non-real time RIC applications (i.e., rApps) can intelligently and autonomously manage networks and monetize network resources. xApps and rApps can provide energy savings and improve energy efficiency by providing intelligent energy management, including mechanisms configured to monitor energy consumption (e.g., kilowatt-hour electricity meter) and dynamically perform energy saving actions.

In addition to RAN, which is responsible for energy consumption in the mobile network, near-real time (RT) and non-RT RICs and their corresponding applications (i.e., xApps/rApps/platform services) may continuously process data (e.g., with artificial intelligence (AI)/machine learning (ML) processing), but with the downside of consuming significant energy. Although there are various standardized mechanisms that can optimize and reduce energy consumption in the RAN, there are no standard mechanisms to monitor and optimize energy consumption of RICs.

Open (Open)-RAN energy savings can be achieved with features such as carrier and cell switch off/on, RF channel reconfiguration off/on, advanced sleep mode selection, and O-cloud resource energy saving modes. However, these features do not monitor energy consumption (i.e., kilowatt-hour electricity meter) of xApps, rApps, and platform services, nor take corrective actions.

3GPP defines key performance indicators to measure energy consumption of network functions in the 5G network. This provides mechanisms to estimate the energy consumption of a virtual network function (VNF) based on mean virtual central processing unit (vCPU) usage, mean virtual memory usage, mean disk usage, and mean input/output (I/O) traffic usage.

When integrated with AI/ML, RICs can manage complex networks intelligently and autonomously, and run xApps/rApps/platform services on the platform to optimize network resource usage and/or create new network monetization opportunities. Near-RT RICs can solve optimization problems that require 10ms to 1s response times, while non-RT RICs can solve optimization problems that require response times ranging from a few minutes to hours or even days.

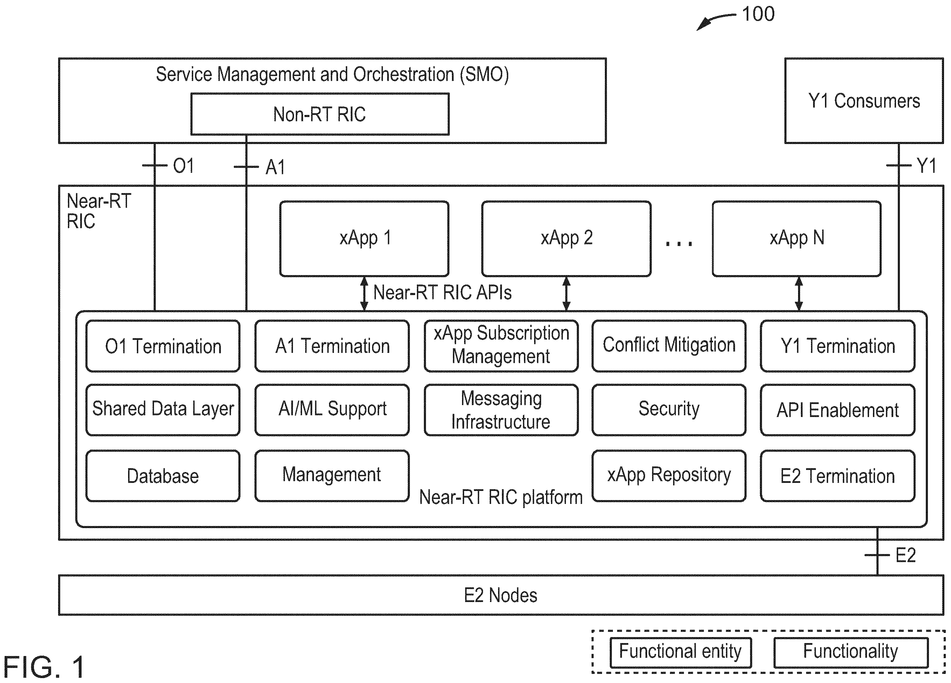

FIG. 1 illustrates near-RT RIC architecture 100 in O-RAN with platform services like shared data layer (SDL), conflict mitigation, xApp subscription management, messaging infrastructure, security, AI/ML support, and xApp repository functions. However, near-RT RIC architecture 100 does not include an energy management platform service configured to monitor energy consumption (*i.e.,* kilowatt-hour energy meter) of xApps and platform services; monitor the status of the overall network (*e.g.,* xApps) and specific platforms; and dynamically take corrective actions to optimize performance, as needed. Thus, there is a need for techniques and mechanisms to monitor and optimize energy consumption of xApps and rApps.

Certain example embodiments described herein may have various benefits and/or advantages to overcome the disadvantages described above. For example, certain example embodiments may reduce energy consumption, conserve limited network resources, and dynamically adjust network configurations. Thus, certain example embodiments discussed below are directed to improvements in computer-related technology.

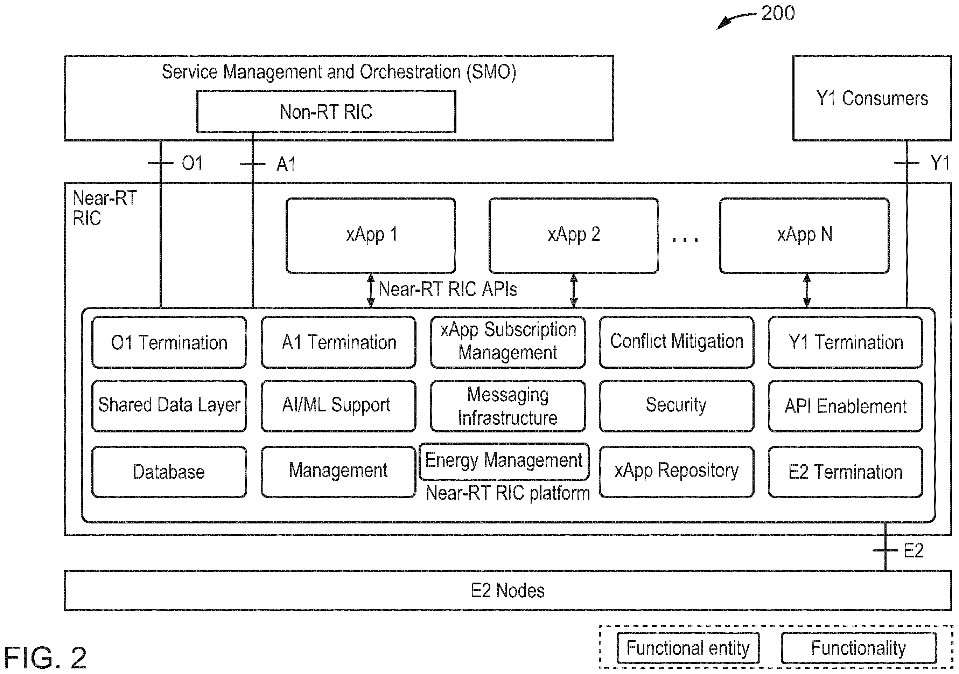

FIG. 2 illustrates an example embodiment of near-RT RIC architecture 200 with an Energy Management functionality. For example, such energy management functionality may monitor xApps/rApps/platform services energy consumption and reporting; monitor the state of the xApps/rApps/platform services, platform, and/or overall network; configure policies to prioritize xApps/rApps/platform services; and schedule times to operate and/or suspend xApps/rApps/platform services to save energy. Energy management functionality may also optimize xApp/rApp/platform service energy consumption, such as by switching to lower cost or greener/cleaner energy alternatives and/or scheduling xApp/rApp/platform service operations based on priority and/or energy cost. Although some example embodiments discussed herein are discussed with respect to near-RT RICs, they may be similarly applied with non-RT RICs.

In order to measure the total energy consumption of the near-RT RIC platform and xApps, various data may be collected from the near-RT RIC platform and xApps, such as CPU usage, disk I/O, RAM access, network interface usage (*e.g.,* A1 interface (*i.e.,* between two RICs), E2 interface (*i.e.,* between real-time RIC in the O-RAN architecture and O-CU, O-CU-CP, O-CU-UP, O-DU, and O-eNB), O1 interface (*i.e.,* between service management and orchestration (SMO) and RAN-managed elements)) in terms of data sent/received, radio access network-network information base (R-NIB) I/Os, UE-NIB I/Os, SDL I/Os, and/or pro-rata usage of platform services (including AI/ML). Pro-rata usage of messaging infrastructure may enable accounting for energy consumed by message interaction between near-RT RIC internal functions. Furthermore, the energy functionality may apply a pro-rata value for each xApp with subscriptions being merged by xApp subscription management. Some of this data may be available on a per xApp basis and/or across the near-RT RIC platform (*e.g.,* may be apportioned to each xApp based on xApp usage). Based upon this data, individual xApp energy consumption may be estimated. Furthermore, when multiple xApps share a resource (*e.g.,* E2 interface) and/or operation (*e.g.,* E2 subscription), energy may be amortized equally or usage-based (*e.g.,* temporal, amount of traffic, etc.) between participating xApps.

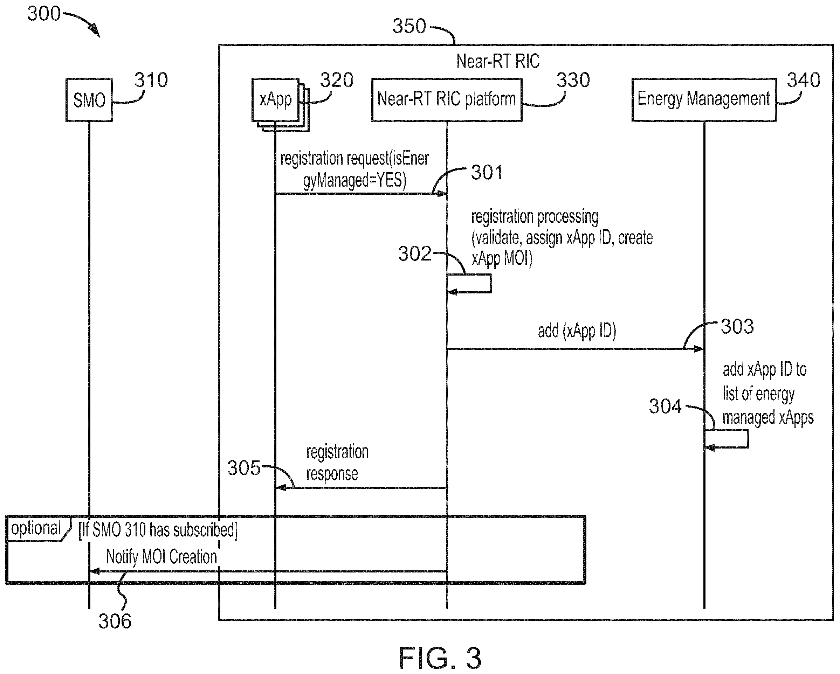

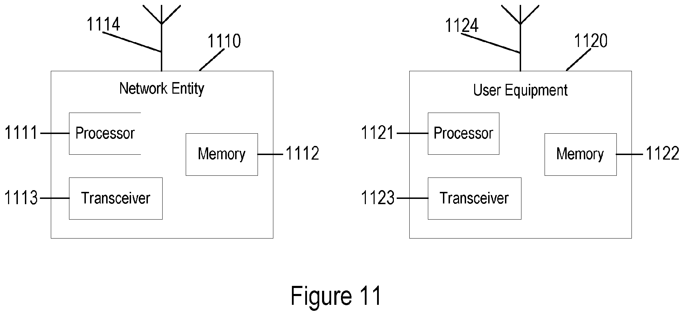

FIG. 3 illustrates signaling diagram 300 depicting example operations for registering xApps for energy management services. SMO entity 310, xApp 320, near-RT RIC platform 330, and/or energy management functionality 340 may be similar to NE 1110, as illustrated in FIG. 11, according to certain example embodiments. xApp 320 may include one or more xApps. Every xApp 320 may not be available for energy management; some xApps may always be on and ineligible for energy saving modes. xApp 320, near-RT RIC platform 330, and energy management functionality 340 may be part of near-RT RIC 350.

At operation 301, xApp 320 may transmit to near-RT RIC platform 330 at least one registration request, which may indicate whether energy consumption of the transmitting xApp 320 is currently managed (*e.g., isEnergyManaged=*Yes, No).

At operation 302, near-RT RIC platform 330 may process the registration request received at operation 301. For example, the processing may include validation, assignment or deletion of an application identifier (ID) associated with the corresponding xApp 320, and/or creating/deleting an application managed object instance (MOI).

At operation 303, near-RT RIC platform 330 may transmit to energy management functionality 340 an indication for energy management functionality 340 to add or delete the assigned application ID to or from a list of energy managed xApps.

In response to operation 303, at operation 304, energy management functionality 340 may add or delete the indicated application ID to or from the list of energy managed xApps.

At operation 305, near-RT RIC platform 330 may transmit to xApp 320 at least one registration response, which may indicate that energy management functionality 340 has added or deleted the indicated application ID to or from the list of energy managed xApps.

In various example embodiments, at operation 306, near-RT RIC platform 330 may transmit to SMO 310 at least one notification that the application MOI has been created or deleted at operation 302. Operation 306 may be performed on the condition that SMO 310 has subscribed for MOI creation or deletion notifications from near-RT RIC platform 330.

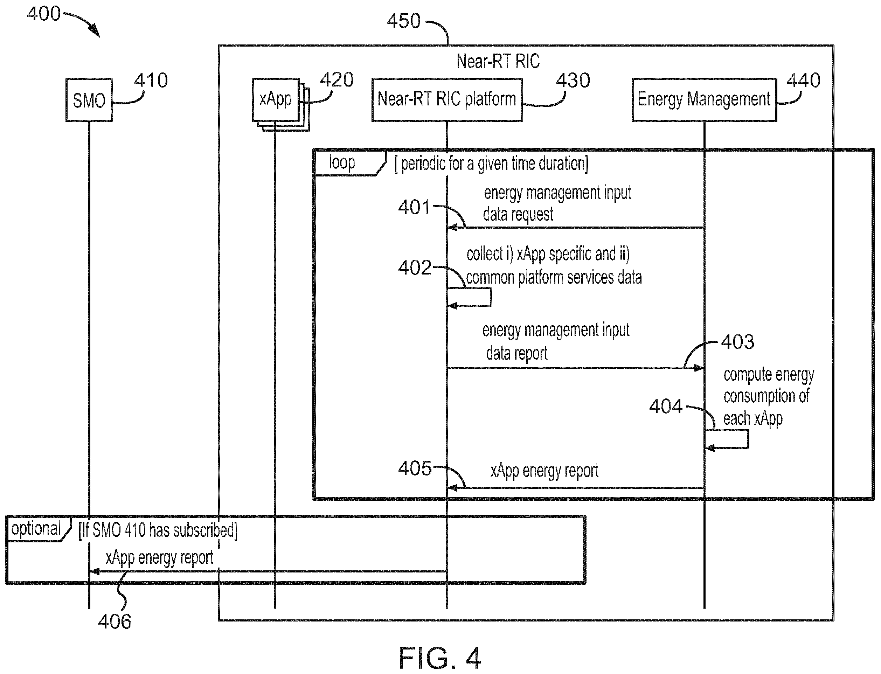

FIG. 4 illustrates signaling diagram 400 depicting example operations for collecting input data, computing energy consumption of xApps and the platform, and reporting them for energy management. SMO 410, xApp 420, near-RT RIC platform 430, and energy management functionality 440 may be similar to NE 1110, as illustrated in FIG. 11, according to certain example embodiments. xApp 420 may include one or more xApps. xApp 420, near-RT RIC platform 430, and energy management functionality 440 may be part of near-RT RIC 450.

In various example embodiments, operations 401-405 may be performed in a loop. For example, at operation 401, energy management functionality 440 may transmit to near-RT RIC platform 430 at least one energy management input data request.

At operation 402, near-RT RIC platform 430 may collect application-specific services data and/or common platform services data. In some example embodiments, xApp-specific data may be collected from xApp specific traffic (*e.g.,* KPIs, messaging) and/or API calls to various platform services (*e.g.,* send/receive A1/E2/Y1/O1 messages or SDL/database access and so on). Platform service data may be readily available at the platform itself which may need to be amortized over xApps.

At operation 403, near-RT RIC platform 430 may transmit to energy management functionality 440 at least one energy management input data report.

At operation 404, energy management functionality 440 may compute energy consumption of each xApp 420.

At operation 405, energy management functionality 440 may transmit to near-RT RIC platform 430 at least one application energy report indicating the computed energy consumption of each xApp 420.

In various example embodiments, at operation 406, near-RT RIC platform 430 may transmit to SMO 410 at least one notification (*e.g.,* via O1 interface) of the application energy report received at operation 405. Operation 406 may be performed on the condition that SMO 410 has subscribed to near-RT RIC platform 430 for application energy report notifications.

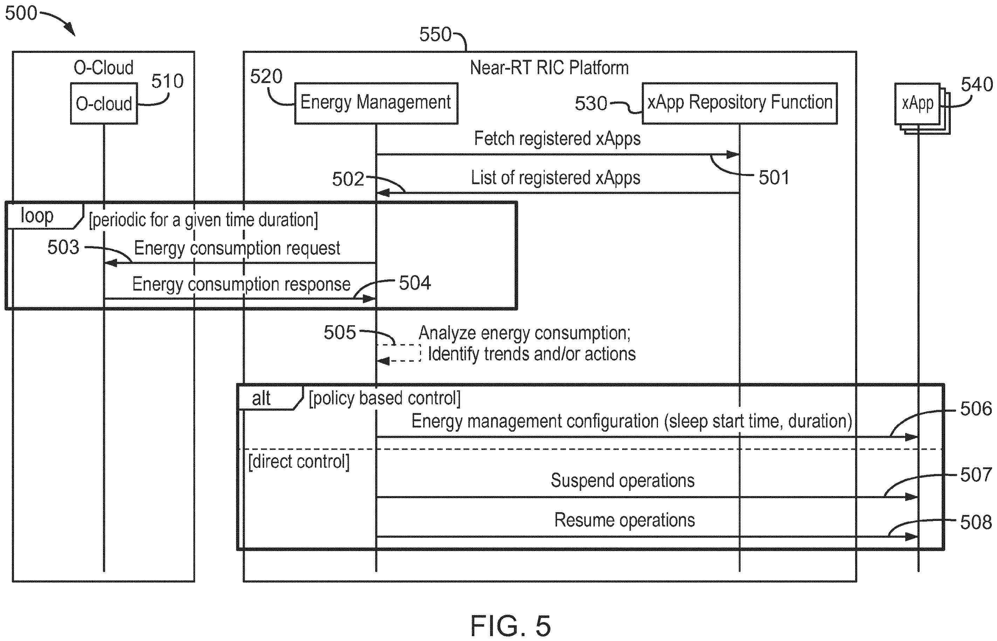

FIG. 5 illustrates signaling diagram 500 depicting example operations for collecting energy consumption with cloud resources, and analyzing/managing energy consumption by xApps. O-cloud 510, energy management functionality 520, application repository function 530, and xApp 540 may be similar to NE 1110, as illustrated in FIG. 11, according to certain example embodiments. Energy management functionality 520 and application repository function 530 may be part of near-RT RIC platform 550.

At operation 501, energy management functionality 520 may transmit to application repository function 530 at least one request to fetch registered xApps from among xApp 540.

At operation 502, application repository function 530 may transmit to energy management functionality 520 a list of registered xApps from among xApp 540 that are registered.

At operation 503, energy management functionality 520 may transmit at least one energy consumption request to O-cloud 510, and in response, at operation 504, O-cloud 510 may transmit to energy management functionality 520 at least one energy consumption response. Operations 503-504 may be for energy consumption of cloud resources (*e.g*., used for all xApps and near-RT RIC platform services, rather than every xApp 540. Operations 503-504 may also be performed in a loop and/or periodically.

At operation 505, energy management functionality 520 may analyze the at least one energy consumption response received at operation 504 to identify energy consumption trends and/or actions. Energy management functionality 520 may implement at least one sub-function to compute energy consumption for each xApp 540.

In various example embodiments, the analysis by energy management functionality 520 may include RIC platform AI/ML support, which may be performed periodically. For example, RIC platform AI/ML support may include identifying energy consumption trends based upon a list of registered xApps and/or near-RT RIC platform services; xApp state and network state information (*e.g.,* if the cells switched off for energy saving); energy source *(e.g.,* power mains, batteries, uninterruptible power supply (UPS)), time-variable costs (*e.g.,* lower costs during off-peak hours); remaining capacity of limited energy sources (*e.g.,* battery, UPS); and energy source information (*e.g.,* renewable (*e.g.,* solar, wind, geothermal, ocean) or non-renewable (*e.g.,* nuclear, natural gas, coal, oil) energy source).

In certain example embodiments, energy management functionality 520 may identify energy consumption trends over a period of time for xApps and/or VNFs. In some example embodiments, energy management functionality 520 may identify actions to optimize energy consumption by xApp 540. For example, energy management functionality 520 may configure the sleep start time and/or duration of xApp 540, and based on this configuration, may cause xApp 540 to enter into an energy saving mode (*e.g.,* sleep). As another example, energy management functionality 520 may transmit at least one energy-saving message to xApp 540 configured to suspend xApp 540 operations in an energy-saving mode, and/or resume xApp 540 operations to exit the energy-saving mode.

Alternatively or additionally, operation 505 may be performed by at least one of xApp 540, which may include inter-xApp communication between xApps 540, near-RT RIC application programming interfaces (APIs), and databases to determine if another application *(*e*.g.,* xApp 540) could be put to an energy-saving mode (*e.g.,* when all the cells served by that xApp are switched off due to network energy saving use case).

Alternatively or additionally, operation 505 may be performed by an SMO, such as an (*e.g.,* SMO 410 illustrated in FIG. 4), which may leverage an O1 interface to manage xApps (*e.g.,* suspend/resume modes) as a managed application. This implementation may be extended to rApps by leveraging certain commonalities.

At operation 506, energy management functionality 520 may transmit to at least one of xApps 540 at least one energy management configuration. For example, the energy management configuration may include a sleep start time and/or duration. Operation 507 may be a policy-based control.

At operation 507, energy management functionality 520 may transmit to at least one of xApps 540 an indication for the corresponding xApps 540 to suspend operations.

Similarly, at operation 508, energy management functionality 520 may transmit to at least one of xApps 540 an indication for the corresponding xApps 540 to resume operations. Operations 507-508 may be direct control operations.

According to any of the embodiments described above, a near-RT RIC platform shall provide energy management functionality. Similarly, Near-RT RIC APIs for energy management shall provide the capability to monitor and report xApp energy consumption, configure policies to prioritize, and/or schedule and suspend xApps. In addition, the near-RT RIC APIs for energy management shall provide the capability to optimize the xApp usage based on the energy source.

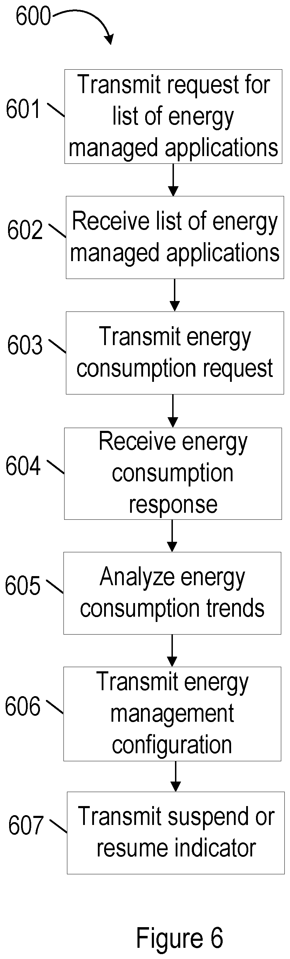

FIG. 6 illustrates an example of a flow diagram of a method 600 that may be performed by an energy management entity, such as NE 1110 illustrated in FIG. 11, according to various example embodiments.

At step 601, the method may include transmitting, by an energy management entity, to a near-real time radio access network intelligent controller application repository function, at least one request for a list of registered near-real time radio access network intelligent controller applications from a plurality of registered near-real time radio access network intelligent controller applications.

At step 602, the method may further include receiving, by the energy management entity, from the near-real time radio access network intelligent controller application repository function, the list of registered near-real time radio access network intelligent controller applications from among the plurality of registered near-real time radio access network intelligent controller applications.

At step 603, the method may further include transmitting, by the energy management entity, at least one energy consumption request to an open cloud entity.

At step 604, the method may further include receiving, by the energy management entity, at least one energy consumption response from the open cloud entity.

At step 605, the method may further include analyzing, by the energy management entity, energy consumption trends of the list of registered near-real time radio access network intelligent controller applications to identify at least one trend or action.

At step 606, the method may further include transmitting, by the energy management entity, at least one energy management configuration to a near-real time radio access network intelligent controller application.

At step 607, the method may further include at least one of transmitting, by the energy management entity, to the near-real time radio access network intelligent controller application, at least one indication for the near-real time radio access network intelligent controller application to suspend operations, or transmitting, by the energy management entity, to the near-real time radio access network intelligent controller application, at least one indication for the near-real time radio access network intelligent controller application to resume operations.

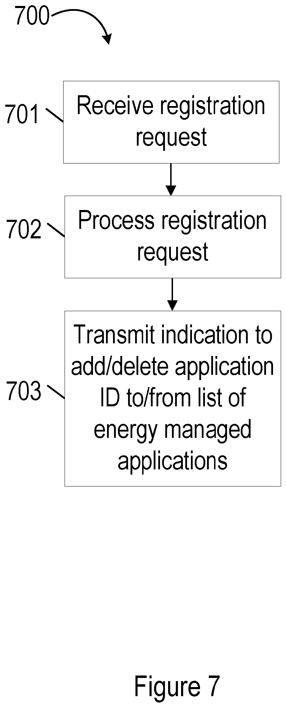

FIG. 7 illustrates an example of a flow diagram of a method 700 that may be performed by a NE, such as NE 1110 illustrated in FIG. 11, according to various example embodiments.

At step 701, the method may include receiving, by a network entity, from an application, a registration request. In some example embodiments, the application may include an energy-managed application. In addition, the network entity may include a near-real time radio access network intelligent controller platform.

At step 702, the method may further include processing, by the network entity, the registration request.

At step 703, the method may further include transmitting, by the network entity, to an energy management entity, an indication configured to add or delete an application identifier to or from a list of energy managed applications.

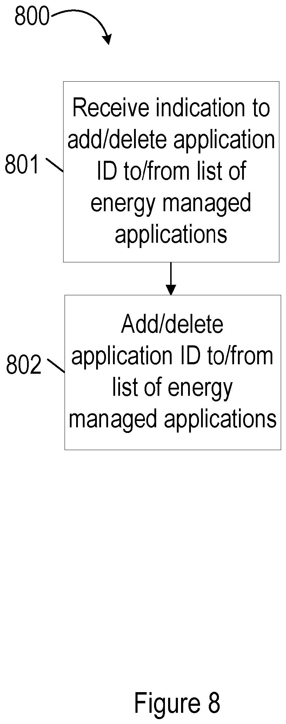

FIG. 8 illustrates an example of a flow diagram of a method 800 that may be performed by an application, such as NE 1110 illustrated in FIG. 11, according to various example embodiments.

At step 801, the method may include receiving, by an application, from a near-real time radio access network intelligent controller platform, an indication configured to add or delete an application identifier to or from a list of energy managed applications.

At step 802, the method may further include adding or deleting, by the application, the application identifier to or from the list of energy managed applications.

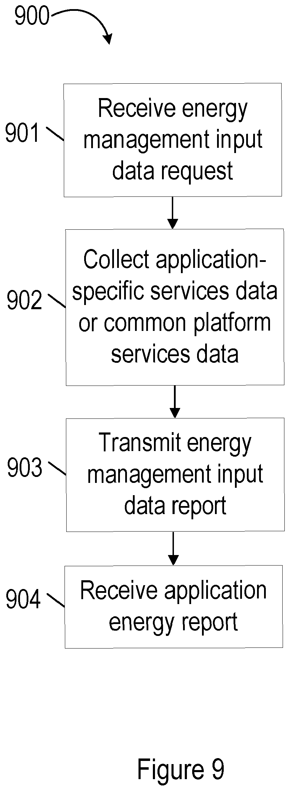

FIG. 9 illustrates an example of a flow diagram of a method 900 that may be performed by a NE, such as NE 1110 illustrated in FIG. 11, according to various example embodiments.

At step 901, the method may include receiving, by a network entity, from an energy management entity, an energy management input data request. In some example embodiments, the network entity may include a near-real time radio access network intelligent controller platform. In various example embodiments, the network entity may include a non-real time radio access network intelligent controller platform.

At step 902, the method may further include collecting, by the network entity, at least one of application-specific services data or common platform services data.

At step 903, the method may further include transmitting, by the network entity, to the energy management entity, an energy management input data report.

At step 904, the method may further include receiving, by the network entity, from the energy management entity, an application energy report.

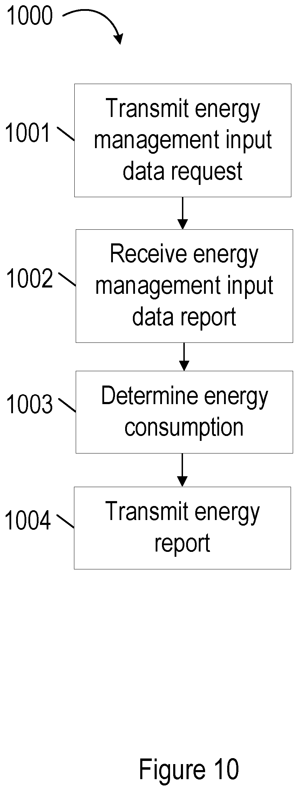

FIG. 10 illustrates an example of a flow diagram of a method 1000 that may be performed by an energy management entity, such as NE 1110 illustrated in FIG. 11, according to various example embodiments.

At step 1001, the method may include transmitting, by an energy management entity, to a network entity, an energy management input data request.

At step 1002, the method may further include receiving, by the energy management entity, from the network entity, an energy management input data report.

At step 1003, the method may further include determining, by the energy management entity, energy consumption for an application.

At step 1004, the method may further include transmitting, by the energy management entity, to the network entity, an energy report comprising the determined energy consumption for the application.

FIG. 11 illustrates an example of a system according to certain example embodiments. In one example embodiment, a system may include multiple devices, such as, for example, NE 1110 and/or UE 1120.

NE 1110 may be one or more of a base station (*e.g.,* 3G UMTS NodeB, 4G LTE Evolved NodeB, or 5G NR Next Generation NodeB), a serving gateway, a server, and/or any other access node or combination thereof.

NE 1110 may further include at least one gNB-centralized unit (CU), which may be associated with at least one gNB-distributed unit (DU). The at least one gNB-CU and the at least one gNB-DU may be in communication via at least one F1 interface, at least one Xₙ-C interface, and/or at least one NG interface via a 5^{th} generation core (5GC).

UE 1120 may include one or more of a mobile device, such as a mobile phone, smart phone, personal digital assistant (PDA), tablet, or portable media player, digital camera, pocket video camera, video game console, navigation unit, such as a global positioning system (GPS) device, desktop or laptop computer, single-location device, such as a sensor or smart meter, or any combination thereof. Furthermore, NE 1110 and/or UE 1120 may be one or more of a citizens broadband radio service device (CBSD).

NE 1110 and/or UE 1120 may include at least one processor, respectively indicated as 1111 and 1121. Processors 1111 and 1121 may be embodied by any computational or data processing device, such as a central processing unit (CPU), application specific integrated circuit (ASIC), or comparable device. The processors may be implemented as a single controller, or a plurality of controllers or processors.

At least one memory may be provided in one or more of the devices, as indicated at 1112 and 1122. The memory may be fixed or removable. The memory may include computer program instructions or computer code contained therein. Memories 1112 and 1122 may independently be any suitable storage device, such as a non-transitory computer-readable medium. The term "non-transitory," as used herein, may correspond to a limitation of the medium itself (*i.e.,* tangible, not a signal) as opposed to a limitation on data storage persistency (*e.g.,* random access memory (RAM) vs. read-only memory (ROM)). A hard disk drive (HDD), random access memory (RAM), flash memory, or other suitable memory may be used. The memories may be combined on a single integrated circuit as the processor, or may be separate from the one or more processors. Furthermore, the computer program instructions stored in the memory, and which may be processed by the processors, may be any suitable form of computer program code, for example, a compiled or interpreted computer program written in any suitable programming language.

Processors 1111 and 1121, memories 1112 and 1122, and any subset thereof, may be configured to provide means corresponding to the various blocks of FIGs. 1-10. Although not shown, the devices may also include positioning hardware, such as GPS or micro electrical mechanical system (MEMS) hardware, which may be used to determine a location of the device. Other sensors are also permitted, and may be configured to determine location, elevation, velocity, orientation, and so forth, such as barometers, compasses, and the like.

As shown in FIG. 11, transceivers 1113 and 1123 may be provided, and one or more devices may also include at least one antenna, respectively illustrated as 1114 and 1124. The device may have many antennas, such as an array of antennas configured for multiple input multiple output (MIMO) communications, or multiple antennas for multiple RATs. Other configurations of these devices, for example, may be provided. Transceivers 1113 and 1123 may be a transmitter, a receiver, both a transmitter and a receiver, or a unit or device that may be configured both for transmission and reception.

The memory and the computer program instructions may be configured, with the processor for the particular device, to cause a hardware apparatus, such as UE, to perform any of the processes described above (*i.e.,* FIGs. 1-10). Therefore, in certain example embodiments, a non-transitory computer-readable medium may be encoded with computer instructions that, when executed in hardware, perform a process such as one of the processes described herein. Alternatively, certain example embodiments may be performed entirely in hardware.

In certain example embodiments, an apparatus may include circuitry configured to perform any of the processes or functions illustrated in FIGs. 1-10. As used in this application, the term "circuitry" may refer to one or more or all of the following: (a) hardware-only circuit implementations (such as implementations in only analog and/or digital circuitry), (b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions), and (c) hardware circuit(s) and or processor(s), such as a microprocessor(s) or a portion of a microprocessor(s), that requires software (e.g., firmware) for operation, but the software may not be present when it is not needed for operation. This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

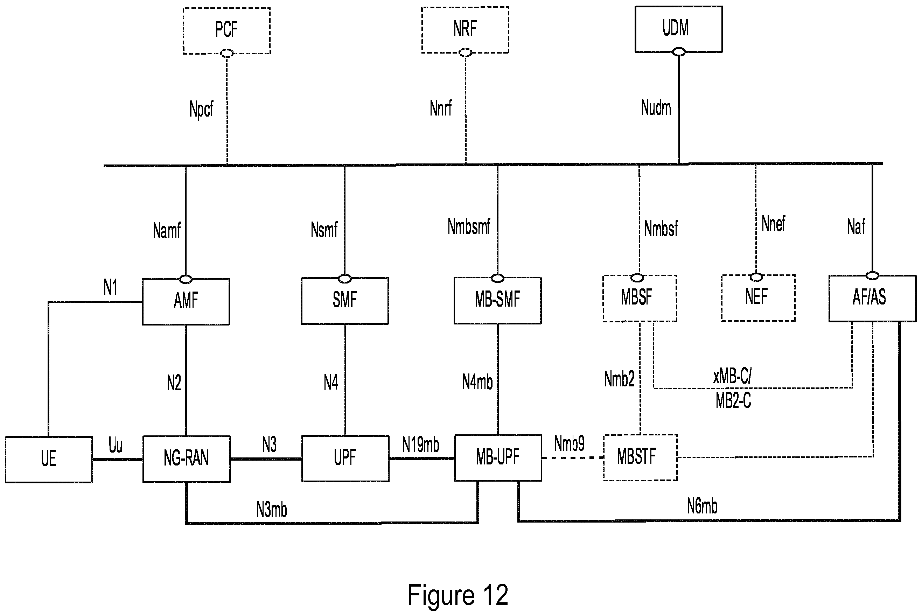

FIG. 12 illustrates an example of a 5G network and system architecture according to certain example embodiments. Shown are multiple network functions that may be implemented as software operating as part of a network device or dedicated hardware, as a network device itself or dedicated hardware, or as a virtual function operating as a network device or dedicated hardware. The NE and UE illustrated in FIG. 12 may be similar to NE 1110 and UE 1120, respectively. The user plane function (UPF) may provide services such as intra-RAT and inter-RAT mobility, routing and forwarding of data packets, inspection of packets, user plane quality of service (QoS) processing, buffering of downlink packets, and/or triggering of downlink data notifications. The application function (AF) may primarily interface with the core network to facilitate application usage of traffic routing and interact with the policy framework.

According to certain example embodiments, processors 1111 and 1121, and memories 1112 and 1122, may be included in or may form a part of processing circuitry or control circuitry. In addition, in some example embodiments, transceivers 1113 and 1123 may be included in or may form a part of transceiving circuitry.

In some example embodiments, an apparatus (*e.g.,* NE 1110 and/or UE 1120) may include means for performing a method, a process, or any of the variants discussed herein. Examples of the means may include one or more processors, memory, controllers, transmitters, receivers, and/or computer program code for causing the performance of the operations.

In various example embodiments, apparatus 1110 may be controlled by memory 1112 and processor 1111 to transmit, to a near-real time radio access network intelligent controller application repository function, at least one request for a list of registered near-real time radio access network intelligent controller applications from a plurality of registered near-real time radio access network intelligent controller applications; receive, from the near-real time radio access network intelligent controller application repository function, the list of registered near-real time radio access network intelligent controller applications from among the plurality of registered near-real time radio access network intelligent controller applications; and analyze energy consumption trends of the list of registered near-real time radio access network intelligent controller applications to identify at least one trend or action.

Certain example embodiments may be directed to an apparatus that includes means for performing any of the methods described herein including, for example, means for transmitting, to a near-real time radio access network intelligent controller application repository function, at least one request for a list of registered near-real time radio access network intelligent controller applications from a plurality of registered near-real time radio access network intelligent controller applications; means for receiving, from the near-real time radio access network intelligent controller application repository function, the list of registered near-real time radio access network intelligent controller applications from among the plurality of registered near-real time radio access network intelligent controller applications; and means for analyzing energy consumption trends of the list of registered near-real time radio access network intelligent controller applications to identify at least one trend or action.

In various example embodiments, apparatus 1110 may be controlled by memory 1112 and processor 1111 to receive, from an application, a registration request; process the registration request; and transmit, to an energy management entity, an indication configured to add or delete an application identifier to or from a list of energy managed applications.

Certain example embodiments may be directed to an apparatus that includes means for performing any of the methods described herein including, for example, means for receiving, from an application, a registration request; means for processing the registration request; and means for transmitting, to an energy management entity, an indication configured to add or delete an application identifier to or from a list of energy managed applications.

In various example embodiments, apparatus 1110 may be controlled by memory 1112 and processor 1111 to receive, from a near-real time radio access network intelligent controller platform, an indication configured to add or delete an application identifier to or from a list of energy managed applications; and add or delete the application identifier to or from the list of energy managed applications.

Certain example embodiments may be directed to an apparatus that includes means for performing any of the methods described herein including, for example, means for receiving, from a near-real time radio access network intelligent controller platform, an indication configured to add or delete an application identifier to or from a list of energy managed applications; and means for adding or deleting the application identifier to or from the list of energy managed applications.

In various example embodiments, apparatus 1110 may be controlled by memory 1112 and processor 1111 to receive, from an energy management entity, an energy management input data request; collect at least one of application-specific services data or common platform services data; transmit, to the energy management entity, an energy management input data report; and receive from the energy management entity, an application energy report.

Certain example embodiments may be directed to an apparatus that includes means for performing any of the methods described herein including, for example, means for receiving, from an energy management entity, an energy management input data request; means for collecting at least one of application-specific services data or common platform services data; means for transmitting, to the energy management entity, an energy management input data report; and means for receiving, from the energy management entity, an application energy report.

In various example embodiments, apparatus 1110 may be controlled by memory 1112 and processor 1111 to transmit, to a network entity, an energy management input data request; receive, from the network entity, an energy management input data report; determine energy consumption for an application; and transmit, to the network entity, an energy report comprising the determined energy consumption for the application.

Certain example embodiments may be directed to an apparatus that includes means for performing any of the methods described herein including, for example, means for transmitting, to a network entity, an energy management input data request; means for receiving, from the network entity, an energy management input data report; means for determining energy consumption for an application; and means for transmitting, to the network entity, an energy report comprising the determined energy consumption for the application.

The features, structures, or characteristics of example embodiments described throughout this specification may be combined in any suitable manner in one or more example embodiments. For example, the usage of the phrases "various embodiments," "certain embodiments," "some embodiments," or other similar language throughout this specification refers to the fact that a particular feature, structure, or characteristic described in connection with an example embodiment may be included in at least one example embodiment. Thus, appearances of the phrases "in various embodiments," "in certain embodiments," "in some embodiments," or other similar language throughout this specification does not necessarily all refer to the same group of example embodiments, and the described features, structures, or characteristics may be combined in any suitable manner in one or more example embodiments.

As used herein, "at least one of the following: <a list of two or more elements>" and "at least one of <a list of two or more elements>" and similar wording, where the list of two or more elements are joined by "and" or "or," mean at least any one of the elements, or at least any two or more of the elements, or at least all the elements.

Additionally, if desired, the different functions or procedures discussed above may be performed in a different order and/or concurrently with each other. Furthermore, if desired, one or more of the described functions or procedures may be optional or may be combined. As such, the description above should be considered as illustrative of the principles and teachings of certain example embodiments, and not in limitation thereof.

One having ordinary skill in the art will readily understand that the example embodiments discussed above may be practiced with procedures in a different order, and/or with hardware elements in configurations which are different than those which are disclosed. Therefore, although some embodiments have been described based upon these example embodiments, it would be apparent to those of skill in the art that certain modifications, variations, and alternative constructions would be apparent, while remaining within the spirit and scope of the example embodiments.

### Partial Glossary

- 3GPP: 3^{rd} Generation Partnership Project
- 5G: 5^{th} Generation
- 5GC: 5^{th} Generation Core
- 6G: 6^{th} Generation
- AF: Application Function
- AI: Artificial Intelligence
- API: Application Programming Interface
- ASIC: Application Specific Integrated Circuit
- CBSD: Citizens Broadband Radio Service Device
- CPU: Central Processing Unit
- CU: Centralized Unit
- DRX: Discontinuous Reception
- DTX: Discontinuous Transmission
- DU: Distributed Unit
- eMBB: Enhanced Mobile Broadband
- eNB: Evolved Node B
- gNB: Next Generation Node B
- GPS: Global Positioning System
- HDD: Hard Disk Drive
- ID: Identifier
- I/O: Input/Output
- IoT: Internet of Things
- LTE: Long-Term Evolution
- LTE-A: Long-Term Evolution Advanced
- MEMS: Micro Electrical Mechanical System
- MIMO: Multiple Input Multiple Output
- ML: Machine Learning
- mMTC: Massive Machine Type Communication
- MOI: Managed Object Instance
- NE: Network Entity
- NG: Next Generation
- NG-eNB: Next Generation Evolved Node B
- NG-RAN: Next Generation Radio Access Network
- NR: New Radio
- O-RAN: Open Radio Access Network
- PDA: Personal Digital Assistance
- QoS: Quality of Service
- RAM: Random Access Memory
- RAN: Radio Access Network
- RAT: Radio Access Technology
- RF: Radio Frequency
- RIC: RAN Intelligent Controller
- R-NIB: Radio Network Information Base
- ROM: Read-Only Memory
- RT: Real-Time
- SDL: Shared Data Layer
- SMO: Service Management and Orchestration
- UE: User Equipment
- UMTS: Universal Mobile Telecommunications System
- UPF: User Plane Function
- UPS: Uninterruptible Power Supply
- URLLC: Ultra-Reliable and Low-Latency Communication
- UTRAN: Universal Mobile Telecommunications System Terrestrial Radio Access Network

- vCPU: Virtual Central Processing Unit
- VNF: Virtual Network Function

## Claims

1. A method comprising:
transmitting (601), by an energy management entity, to a near-real time radio access network intelligent controller application repository function, at least one request for a list of registered near-real time radio access network intelligent controller applications from a plurality of registered near-real time radio access network intelligent controller applications;
receiving (602), by the energy management entity, from the near-real time radio access network intelligent controller application repository function, the list of registered near-real time radio access network intelligent controller applications from among the plurality of registered near-real time radio access network intelligent controller applications; and
analyzing (605), by the energy management entity, energy consumption trends of the list of registered near-real time radio access network intelligent controller applications to identify at least one trend or action.

2. The method of claim 1, further comprising:
transmitting (603), by the energy management entity, at least one energy consumption request to an open cloud entity; and
receiving (604), by the energy management entity, at least one energy consumption response from the open cloud entity.

3. The method of claim 1, further comprising:
transmitting (606), by the energy management entity, at least one energy management configuration to a near-real time radio access network intelligent controller application; and at least one of
transmitting (607), by the energy management entity, to the near-real time radio access network intelligent controller application, at least one indication for the near-real time radio access network intelligent controller application to suspend operations; or
transmitting (607), by the energy management entity, to the near-real time radio access network intelligent controller application, at least one indication for the near-real time radio access network intelligent controller application to resume operations.

4. A method comprising:
receiving (701), by a network entity, from an application, a registration request;
processing (702), by the network entity, the registration request; and
transmitting (703), by the network entity, to an energy management entity, an indication configured to add or delete an application identifier to or from a list of energy managed applications,
wherein for example the application comprises an energy-managed application,
wherein for example the network entity comprises a near-real time radio access network intelligent controller platform.

5. A method comprising:
receiving (801), by an application, from a near-real time radio access network intelligent controller platform, an indication configured to add or delete an application identifier to or from a list of energy managed applications; and
adding (802) or deleting (802), by the application, the application identifier to or from the list of energy managed applications.

6. A method comprising:
receiving (901), by a network entity, from an energy management entity, an energy management input data request;
collecting (902), by the network entity, at least one of:
application-specific services data; or
common platform services data;
transmitting (903), by the network entity, to the energy management entity, an energy management input data report; and
receiving (904), by the network entity, from the energy management entity, an application energy report,
wherein for example the network entity comprises a near-real time radio access network intelligent controller platform,
wherein for example the network entity comprises a non-real time radio access network intelligent controller platform.

7. A method comprising:
transmitting (1001), by an energy management entity, to a network entity, an energy management input data request;
receiving (1002), by the energy management entity, from the network entity, an energy management input data report;
determining (1003), by the energy management entity, energy consumption for an application; and
transmitting (1004), by the energy management entity, to the network entity, an energy report comprising the determined energy consumption for the application.

8. An apparatus (1110) comprising:
at least one processor (1111); and
at least one memory (1112) storing instructions that, when executed by the at least one processor (1111), cause the apparatus (1110) at least to:
transmit (601), to a near-real time radio access network intelligent controller application repository function, at least one request for a list of registered near-real time radio access network intelligent controller applications from a plurality of registered near-real time radio access network intelligent controller applications;
receive (602), from the near-real time radio access network intelligent controller application repository function, the list of registered near-real time radio access network intelligent controller applications from among the plurality of registered near-real time radio access network intelligent controller applications; and
analyze (605) energy consumption trends of the list of registered near-real time radio access network intelligent controller applications to identify at least one trend or action,
wherein for example the at least one memory (1112) and the instructions, when executed by the at least one processor (1111), further cause the apparatus (1110) at least to:
transmit (603) at least one energy consumption request to an open cloud entity; and
receive (604) at least one energy consumption response from the open cloud entity,
wherein for example the at least one memory (1112) and the instructions, when executed by the at least one processor (1111), further cause the apparatus (1110) at least to:
transmit (606) at least one energy management configuration to a near-real time radio access network intelligent controller application; and at least one of
transmit (607), to the near-real time radio access network intelligent controller application, at least one indication for the near-real time radio access network intelligent controller application to suspend operations; or
transmit (607), to the near-real time radio access network intelligent controller application, at least one indication for the near-real time radio access network intelligent controller application to resume operations.

9. An apparatus (1110) comprising:
at least one processor (1111); and
at least one memory (1112) storing instructions that, when executed by the at least one processor (1111), cause the apparatus (1110) at least to:
receive (701), from an application, a registration request;
process (702) the registration request; and
transmit (703), to an energy management entity, an indication configured to add or delete an application identifier to or from a list of energy managed applications,
wherein for example the application comprises an energy-managed application.

10. The apparatus (1110) of claim 9, wherein the network entity comprises a near-real time radio access network intelligent controller platform.

11. An apparatus comprising:
at least one processor; and
at least one memory storing instructions that, when executed by the at least one processor, cause the apparatus at least to:
receive, from a near-real time radio access network intelligent controller platform, an indication configured to add or delete an application identifier to or from a list of energy managed applications; and
add or delete the application identifier to or from the list of energy managed applications.

12. An apparatus comprising:
at least one processor; and
at least one memory storing instructions that, when executed by the at least one processor, cause the apparatus at least to:
receive, from an energy management entity, an energy management input data request;
collect at least one of
application-specific services data; or
common platform services data;
transmit, to the energy management entity, an energy management input data report; and
receive, from the energy management entity, an application energy report.

13. The apparatus of claim 12, wherein the network entity comprises a near-real time radio access network intelligent controller platform.

14. The apparatus of claim 12, wherein the network entity comprises a non-real time radio access network intelligent controller platform.

15. An apparatus comprising:
at least one processor; and
at least one memory storing instructions that, when executed by the at least one processor, cause the apparatus at least to:
transmit, to a network entity, an energy management input data request;
receive, from the network entity, an energy management input data report;
determine energy consumption for an application; and
transmit, to the network entity, an energy report comprising the determined energy consumption for the application.
